# EUROPEAN PATENT APPLICATION

(11) **EP 4 276 578 A1**
(43) Date of publication of application: **15.11.2023**
(21) Application number: 23172829.6
(22) Date of filing: 11.05.2023
(51) Int. Cl.: G06F 1/16, G06F 1/26

(54) **BIOMETRIC MONITORING WRIST DEVICE**

(30) Priority: 13.05.2022 US 202263341980 P
(71) Applicant: Meta Platforms Technologies, LLC, Menlo Park, CA 94025 (US)
(72) Inventor: SWIGART, Steven, Menlo Park, 94025 (US)
(74) Representative: Murgitroyd & Company

(57) **Abstract**

A wrist device for gathering user data for biometric analysis and related methods, systems, and storage media are disclosed. The wrist device may include a low-power display, a base battery, and sensors. The base module may be configured to operate as a standalone module in a low-power mode. The base module may also be configured to gather data through the sensors. A computing module may be removably coupled with the base module. The computing module may include a high-definition display and a computing battery. The computing module may be configured to analyze the data when coupled to the base module. The computing battery of the computing module may be configured to charge the base battery of the base module when the computing module is coupled to the base module.

## Description

### TECHNICAL FIELD

The present disclosure generally relates to wearable wrist devices, and more particularly to a biometric monitoring wrist device having a standalone low-power base module.

### BACKGROUND

Wearable technology includes smart electronic devices (e.g., electronic devices with micro-controllers) that are worn close to and/or on the surface of the skin of a user. The wearable technology may detect, analyze, and transmit information regarding body signals of the user, such as vital signs, and/or ambient data. Biofeedback may be immediately provided to the user based on the detected body signals. However, wearable technology needs to be taken off to be charged, which hinders their ability to continuously monitor a user's body signals.

### SUMMARY OF THE INVENTION

The subject disclosure provides for a wrist device having a standalone health biometric monitoring low-power wrist base module and a detachable computing module. The low-power wrist base module may continuously monitor body signals of a user (e.g., a wearer) at low-power while the detachable computing module charges separately. Once the charged computing module is coupled to the base module, the computing module may directly charge the base module without having to remove the base module from the user. The computing module may also be configured to access and process the received body signals to output a biometric summary report to the user regarding the user's health and/or other information.

Aspects of the present disclosure relate to a wrist device for gathering user data for biometric analysis.

According to the present invention there is provided a wrist device, comprising: a low-power display, a base battery, and sensors, the base module being configured to (i) operate as a standalone module in a low-power mode and (ii) gather data through the sensors; and a computing module configured to removably couple with the base module, the computing module comprising a high-definition display and a computing battery, the computing module being configured to analyze the data when coupled to the base module, wherein the computing battery of the computing module is configured to charge the base battery of the base module when the computing module is coupled to the base module.

Optionally, the base module further comprises a base processor.

Optionally the computing module further comprises a computing processor.

Optionally, the base processor operates at a lower processing threshold than the computing processor.

Optionally, the sensors are enabled or disabled depending on available power in the base battery.

Optionally the base battery has a charged lifetime of over 300 hours.

Optionally the base module prioritizes operation in a power savings mode.

Optionally, the sensors comprise biometric sensors.

Optionally the data comprises biometric data.

Optionally the low-power display comprises a flexible electrophoretic display.

Optionally the computing module further comprises a camera.

Optionally, different computing modules comprise varying sized screens.

Optionally, different computing modules comprise varying quality and size of camera modules.

Optionally, the base module is configured to communicatively couple with an augmented reality/virtual reality (AR/VR) headset.

According to the present invention there is further provided a non-transitory computer-readable storage medium comprising instructions stored thereon, which when executed by one or more processors, cause the one or more processors to perform operations for processing data obtained from a wrist device, the operations comprising: gathering data through a base module of the wrist device, the base module configured to operate as a standalone module in a low-power mode, the base module configured to gather the data through sensors while in the low-power mode, the wrist device comprising the base module and a detachable computing module; charging the base module by the computing module when the computing module is coupled to the base module; processing the data through the computing module; and causing display of the processed data through the wrist device.

Optionally the charging of the base module further comprises charging a base battery of the base module through a computing battery of the computing module.

Optionally the data comprises biometric data of a user.

Optionally the processed data comprises processed biometric data.

Optionally the sensor comprise biometric sensors.

Optionally the base module is configured to communicatively couple with an augmented reality/virtual reality (AR/VR) headset.

Optionally the processed data is caused to be displayed through a display of the wrist device.

According to the present invention there is yet further provided a system configured for processing biometric data obtained from a wrist device, the system comprising: one or more hardware processors configured by machine-readable instructions to: gather biometric data through a base module of the wrist device, the base module configured to operate as a standalone module in a low-power mode, the base module configured to gather the biometric data through biometric sensors while in the low-power mode, the wrist device comprising the base module and a detachable computing module; charge a base battery of the base module by a computing battery of the computing module when the computing module is coupled to the base module; process the biometric data through the computing module; and cause display of the processed biometric data through the wrist device.

Optionally, the computing battery has larger charge capacity than the base battery.

Optionally, the base module is configured to couple with an augmented reality/virtual reality (AR/VR) headset.

Optionally the processed biometric data is caused to be displayed through a display of the wrist device.

Optionally a method for processing data obtained from a wrist device may include gathering data through a base module of the wrist device. The base module may be configured to operate as a standalone module in a low-power mode. The base module may be configured to gather the data through sensors while in the low-power mode. The wrist device may include the base module and a detachable computing module. The method may include charging the base module by the computing module when the computing module is coupled to the base module. The method may include processing the data through the computing module. The method may include causing display of the processed data through the wrist device.

Optionally a system is configured for processing data obtained from a wrist device. The system may include means for gathering data through a base module of the wrist device. The base module may be configured to operate as a standalone module in a low-power mode. The base module may be configured to gather the data through sensors while in the low-power mode. The wrist device may include the base module and a detachable computing module. The system may include means for charging the base module by the computing module when the computing module is coupled to the base module. The system may include means for processing the data through the computing module. The system may include means for causing display of the processed data through the wrist device.

### BRIEF DESCRIPTION OF THE DRAWINGS

To easily identify the discussion of any particular element or act, the most significant digit or digits in a reference number refer to the figure number in which that element is first introduced.
FIG. 1 is a diagram illustrating an exemplary wrist device, in accordance with one or more implementations.
FIGS. 2A and 2B illustrate exemplary graphical user interfaces (GUIs), in accordance with one or more implementations.
FIG. 3 illustrates a system configured for processing data obtained from a wrist device, in accordance with one or more implementations.
FIG. 4 illustrates an example flow diagram for processing data obtained from a wrist device, according to certain aspects of the disclosure.
FIG. 5 is a block diagram illustrating an example computer system (e.g., representing both client and server) with which aspects of the subject technology can be implemented.

In one or more implementations, not all of the depicted components in each figure may be required, and one or more implementations may include additional components not shown in a figure. Variations in the arrangement and type of the components may be made without departing from the scope of the subject disclosure. Additional components, different components, or fewer components may be utilized within the scope of the subject disclosure.

### DETAILED DESCRIPTION OF EXAMPLES OF THE INVENTION

In the following detailed description, numerous specific details are set forth to provide a full understanding of the present disclosure. It will be apparent, however, to one ordinarily skilled in the art, that the embodiments of the present disclosure may be practiced without some of these specific details. In other instances, well-known structures and techniques have not been shown in detail so as not to obscure the disclosure.

Wearable technology includes smart electronic devices (e.g., electronic devices with micro-controllers) that are worn close to and/or on the surface of the skin of a user. The wearable technology may detect, analyze, and transmit information regarding body signals of the user, such as vital signs, and/or ambient data. Biofeedback may be immediately provided to the user based on the detected body signals. However, wearable technology needs to be taken off to be charged, which hinders their ability to continuously monitor a user's body signals.

Most health biometric devices need to be taken off to charge; this is a problem as many individuals relay on the biometric information through both day and night. For example, tracking sleep behavior would mean it would be difficult to charge such a device at night, and it's also difficult to charge during the day if monitoring steps, or other biometrics such as heart anomalies. Time is critical to health as well; for many "smart watches", battery life is often drained, meaning an individual might be without the time, but because time and alarms are important, the base module can continue to act as a watch, while continuing to collect biometrics.

To help minimize the need to have to take off the device, the device can be separated into two modules, a base module and a compute and display module. Both modules would have compute, display, and battery, but the base module would be extremely efficient using a low-power flexible electrophoretic display, with the necessary sensors, thus the main compute module (i.e., the compute and display module) may be separated from the health monitoring and biometrics gathering base module. The base module could stay on the person and operate stand alone, while the compute module can be charged daily and overnight. The compute module may include a larger battery which will connect with the base module when not charging to allow the compute module with the larger battery to charge the low-power base module.

The subject disclosure provides for a wrist device having a standalone health biometric monitoring low-power wrist base module and a detachable computing module. The low-power wrist base module may continuously monitor body signals of a user (e.g., a wearer) at low-power while the detachable computing module charges separately. Once the charged computing module is coupled to the base module, the computing module may directly charge the base module without having to remove the base module from the user. The computing module may also be configured to access and process the received body signals, from the base module while the computing module was detached, to output a biometric summary report to the user regarding the user's health and/or other information.

According to embodiments, a health biometric monitoring system is disclosed. The system is separated into two modules: a base module, and a processing and display module (also referred to as the computing module or main compute module). The modules are separate and distinct units. Both modules include: a processor, a display, and a battery. The base module uses a low-power flexible electrophoretic display including sensors. The base module is worn by a user and operates as a standalone module. The processing and display module is charged daily and overnight. The base module can connect to the processing and display module for charging. The base module is used for multiple generations (e.g., it would be possible to switch out either the base module or compute module depending on which features the user interacts with the most). The system can be used for self-expression, fashion, communication, photography, and metaverse applications.

According to embodiments, the base module may be used for multiple generations, meaning it would be possible to switch out either the base module or compute module (e.g., computing module), depending on the features that a user cares for most. Different base modules may have different biometric sensors based on an individual's needs, while the different compute modules may have different sizes and features as well, such as varying size screens and/or varying quality and size of camera modules.

In addition to empowering individuals not to have to take off their biometric gathering devices for charging in a seamless manner, the disclosed wrist device also has other potential applications, such as self-expression, fashion, communication, and/or photography.

According to embodiments, the wrist device may be customized to allow the user to choose a base module that has sensors most relevant to the user. Additionally, the computing module may be customized to act as a form of expression by the user. For example, when the user goes to the gym they may use their sport compute module, when going out with family they may use their camera compute module, and when going to an important event they may use their designer compute module with an analogue time piece overlaid with transparent organic light-emitting diode (OLED). The base module is able to stay charged for long periods of time, up to 300 hours or more, so any charge taken from a fully charged compute module would most likely be minimal at any given time, allowing the compute module to optimize for the battery life of both devices. In an aspect, transferring of power may utilize wireless power transmission, or similar technologies.

The base module, as it is intended to be worn at all times, and not necessary to take off, can play a part in the metaverse, in that it would be able to operate in a local mesh network for other various applications. For example, the base module may track various forms of metadata that would not be processed until a later time. In an aspect, in a metaverse mesh network, a user may be made aware that they were in a photo. The base module may collect the data, and then the data may be processed by the compute module when the compute module is attached. If the user went for a run and left the compute module in the car, when they return to the car, they would be able to see if they were in a photo. The user may then request through the metaverse mesh network to be removed from the photo as an example application of how this system could be part of a larger metaverse.

In this way the wrist device enables a user to always collect biometrics, which have health, self-expression, and potential metaverse applications, among other potential applications discussed herein.

Embodiments of the disclosed technology may include or be implemented in conjunction with an artificial reality system. Artificial reality, extended reality, or extra reality (collectively "XR") is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. "Mixed reality" or "MR" refers to systems where light entering a user's eye is partially generated by a computing system and partially composes light reflected off objects in the real world. For example, an MR headset could be shaped as a pair of glasses with a pass-through display, which allows light from the real world to pass through a waveguide that simultaneously emits light from a projector in the MR headset, allowing the MR headset to present virtual objects intermixed with the real objects the user can see. "Artificial reality," "extra reality," or "XR," as used herein, refers to any of VR, AR, MR, or any combination or hybrid thereof.

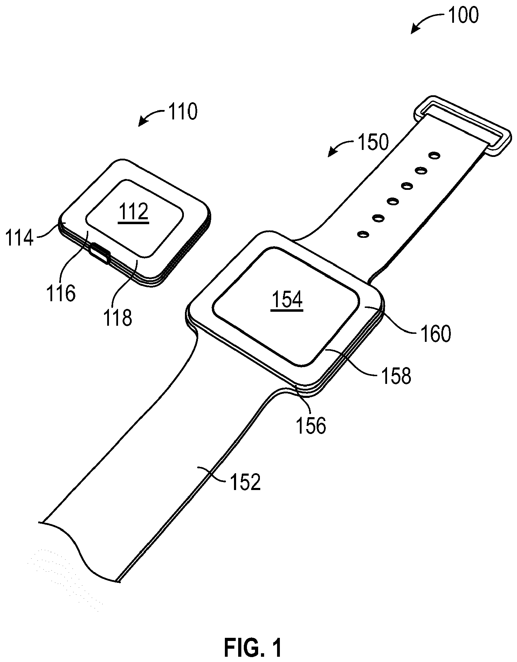

FIG. 1 is a diagram illustrating an exemplary wrist device 100, in accordance with one or more implementations. The wrist device 100 may include a computing module 110 and a base module 150. For example, the computing module 110 may be configured to removably couple with the base module 150.

According to aspects, the base module 150 may include a low-power display 154, a base battery 156, sensors 158, and a base processor 160. The base module 150 may also include straps 152 for attaching to the user (e.g., on the user's wrist). For example, the sensors 158 may include biometric sensors located on the base module 150. The sensors 158 may be located in various locations on the base module 150 depending on a type of biometric data to be sensed. In an implementation, the low-power display 154 may include a flexible electrophoretic display, or the like. In an implementation, the base battery 156 may have a charged lifetime of over 300 hours.

According to aspects, the base module 150 may be configured to operate as a standalone module in a low-power mode. For example, the base module 150 may continue to operate in the low-power mode when the computing module 110 is disconnected from the base module 150. The base module 150 may also be configured to gather data of a user through the sensors 158. For example, the data may include biometric data.

According to aspects, the computing module 110 may include a high-definition display 112, a computing battery 114, and a computing processor 116. For example, the computing battery 114 may have a larger charge capacity than the base battery 156. The computing module 110 may be configured to analyze the data of the user when coupled to the base module 150. In an implementation, the computing module 110 may further include a camera 118.

According to aspects, the base processor 160 may operate at a lower processing threshold than the computing processor 116. For example, the computing processor 116 may have a higher processing threshold than the base processor 160.

In an implementation, the base module 150 may gather biometric data of the user while in the low-power mode and disconnected from the computing module 110. Once the computing module 110 is coupled to the base module 150, the computing processor 116 may process the gathered biometric data of the user from the base module 150 and generate a report. The report may be caused for display through the display 112 of the computing module 110.

According to aspects, the computing battery 114 of the computing module 110 is configured to charge the base battery 156 of the base module 150 when the computing module 110 is coupled to the base module 150. In an implementation, the base module 150 may be configured to wirelessly couple with an augmented reality/virtual reality (AR/VR) headset. For example, the AR/VR headset may become a display, and the base module 150 of the wrist device 100 may provide additional input from the sensors 158 and additional computing power as well. As a result, a user may still experience rich AR/VR interactions while wearing the AR/VR headset with the base module 150.

It is understood that the illustrated wrist device 100 is exemplary only, and various form factors may be utilized without departing from the scope of the disclosure. For example, different compute modules 110 may have varying sized screens and/or varying quality and size of camera modules. The compute modules 110 and/or base modules 150 may also be designed to be fashionable and/or functional based on interests of the user.

According to additional aspects, some of the sensors 158 may be enabled or disabled depending on available power in the base battery 156. For example, the base module 150 may prioritize operation in a power savings first approach (e.g., a power savings mode), such as with an electrophoretic display. The wrist device 100 may also utilize low-powered connectivity solutions to maintain high performance with low-power connectivity. The base module 150 and/or the compute modules 110 may also include a Global Positioning System (GPS) sensor.

According to additional aspects, the base module 150 may utilize a metaverse mesh network protocol to supply information rather than creating its own. Such that, for example, even when the computing module 110 is not attached, location data may be received from the mesh network instead of through its own GPS sensors included in the base module 150 and/or the compute modules 110. In an implementation, the mesh network may prioritize low power and/or may include a low-power protocol, which may limit various aspects of the protocol to optimize for low-power devices.

According to additional aspects, the wrist device 100 may also provide authentication of a user's identity for accessing the metaverse through all other applications in the metaverse. This is because the wrist device 100 is always on a person, and due to the biometrics monitoring aspects of the wrist device 100, the person themselves would naturally be an ideal source of truth for the person's identity.

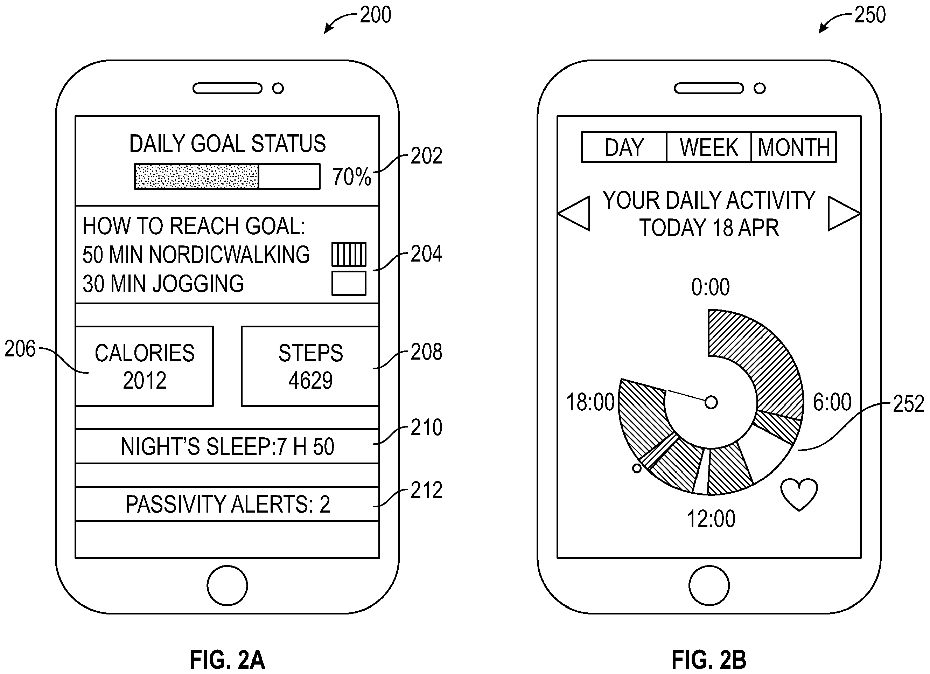

FIGS. 2A and 2B illustrate exemplary graphical user interfaces (GUIs) 200, 250, in accordance with one or more implementations. For example, the GUIs 200, 250 may be generated by the computing processor 116 based on the received biometric data.

Referring to FIG. 2A, the GUI 200 may include a status 202, health data 204, caloric intake 206, number of steps taken 208, amount of sleep 210, and/or alerts 212. It is understood that these are exemplary only, and various other information may be displayed without departing from the scope of the disclosure.

Referring to FIG. 2B, the GUI 250 may include a health summary 252. For example, the health summary 252 may be broken down in terms of days, weeks, months, etc. It is understood that this is exemplary only, and various other summaries may be included without departing from the scope of the disclosure.

The disclosed system(s) address a problem in traditional wearable technology tied to computer technology, namely, the technical problem of gathering and processing data from wearable technology. The disclosed system solves this technical problem by providing a solution also rooted in computer technology, namely, by providing for a wearable wrist device having a low-power base module and a detachable computing module. The disclosed subject technology further provides improvements to the functioning of the computer itself because it improves processing and efficiency for generating biometric reports.

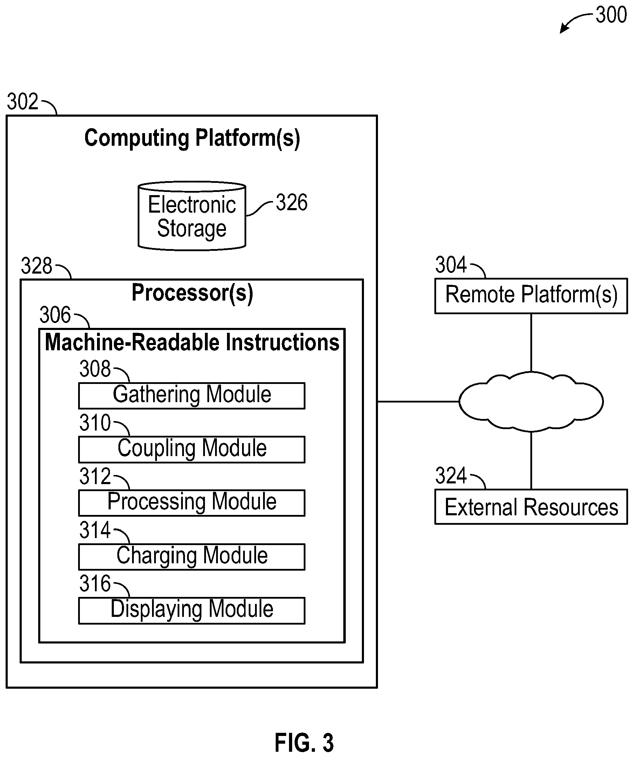

FIG. 3 illustrates a system 300 configured for processing data (e.g., configured for processing biometric data) obtained from a wrist device, in accordance with one or more implementations. In some implementations, system 300 may include one or more computing platforms 302. Computing platform(s) 302 may be configured to communicate with one or more remote platforms 304 according to a client/server architecture, a peer-to-peer architecture, and/or other architectures. Remote platform(s) 304 may be configured to communicate with other remote platforms via computing platform(s) 302 and/or according to a client/server architecture, a peer-to-peer architecture, and/or other architectures. Users may access system 300 via computing platform(s) 302 and/or remote platform(s) 304.

Computing platform(s) 302 may be configured by machine-readable instructions 306. Machine-readable instructions 306 may include one or more instruction modules. The instruction modules may include computer program modules. The instruction modules may include one or more of gathering module 308, coupling module 310, processing module 312, charging module 314, displaying module 316, and/or other instruction modules.

Gathering module 308 may be configured to gather data through a base module of a wrist device. The base module may be configured to operate as a standalone module in a low-power mode. The base module may be configured to gather the data through sensors while in the low-power mode. The wrist device may include the base module and a detachable computing module.

Coupling module 310 may be configured to couple the computing module to the base module, such that the coupling causes charging of the base module by the computing module. The data gathered by the gathering module 308 may also be transmitted to the computing module through the coupling module 310.

Processing module 312 may be configured to process the data through the computing module and generate a report (e.g., a health report). The data to be processed may include, for example, data gathered by the base module when the computing module is not coupled to the base module, data gathered when the computing module is coupled to the base model, or a combination of both. The generated health report may be, for example, a health report containing information associated with a predefined condition (e.g., a specific time or date and/or range, a specified health condition, biometric, characteristic, measurement value or range of values).

Charging module 314 may be configured to charge a base battery of the base module through a computing battery of the computing module.

Displaying module 316 may be configured to cause display of the processed data through the wrist device. The processed data may be displayed through the base module and/or the detachable computing module of the wrist device. For example, the displaying module 316 may cause display of the health report through a GUI. A user may specify the predefined conditions of the health report via the GUI.

In some implementations, computing platform(s) 302, remote platform(s) 304, and/or external resources 324 may be operatively linked via one or more electronic communication links. For example, such electronic communication links may be established, at least in part, via a network such as the Internet and/or other networks. It will be appreciated that this is not intended to be limiting, and that the scope of this disclosure includes implementations in which computing platform(s) 302, remote platform(s) 304, and/or external resources 324 may be operatively linked via some other communication media.

A given remote platform 304 may include one or more processors configured to execute computer program modules. The computer program modules may be configured to enable an expert or user associated with the given remote platform 304 to interface with system 300 and/or external resources 324, and/or provide other functionality attributed herein to remote platform(s) 304. By way of non-limiting example, a given remote platform 304 and/or a given computing platform 302 may include one or more of a server, an artificial reality device and/or system, a desktop computer, a laptop computer, a handheld computer, a tablet computing platform, a NetBook, a Smartphone, a gaming console, and/or other computing platforms.

External resources 324 may include sources of information outside of system 300, external entities participating with system 300, and/or other resources. In some implementations, some or all of the functionality attributed herein to external resources 324 may be provided by resources included in system 300.

Computing platform(s) 302 may include electronic storage 326, one or more processors 328, and/or other components. Computing platform(s) 302 may include communication lines, or ports to enable the exchange of information with a network and/or other computing platforms. Illustration of computing platform(s) 302 in FIG. 3 is not intended to be limiting. Computing platform(s) 302 may include a plurality of hardware, software, and/or firmware components operating together to provide the functionality attributed herein to computing platform(s) 302. For example, computing platform(s) 302 may be implemented by a cloud of computing platforms operating together as computing platform(s) 302.

Electronic storage 326 may comprise non-transitory storage media that electronically stores information. The electronic storage media of electronic storage 326 may include one or both of system storage that is provided integrally (i.e., substantially non-removable) with computing platform(s) 302 and/or removable storage that is removably connectable to computing platform(s) 302 via, for example, a port (e.g., a USB port, a firewire port, etc.) or a drive (e.g., a disk drive, etc.). Electronic storage 326 may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. Electronic storage 326 may include one or more virtual storage resources (e.g., cloud storage, a virtual private network, and/or other virtual storage resources). Electronic storage 326 may store software algorithms, information determined by processor(s) 328, information received from computing platform(s) 302, information received from remote platform(s) 304, and/or other information that enables computing platform(s) 302 to function as described herein.

Processor(s) 328 may be configured to provide information processing capabilities in computing platform(s) 302. As such, processor(s) 328 may include one or more of a digital processor, an analog processor, a digital circuit designed to process information, an analog circuit designed to process information, a state machine, and/or other mechanisms for electronically processing information. Although processor(s) 328 is shown in FIG. 3 as a single entity, this is for illustrative purposes only. In some implementations, processor(s) 328 may include a plurality of processing units. These processing units may be physically located within the same device, or processor(s) 328 may represent processing functionality of a plurality of devices operating in coordination. Processor(s) 328 may be configured to execute modules 308, 310, 312, 314, and/or 316, and/or other modules. Processor(s) 328 may be configured to execute modules 308, 310, 312, 314, and/or 316, and/or other modules by software; hardware; firmware; some combination of software, hardware, and/or firmware; and/or other mechanisms for configuring processing capabilities on processor(s) 328. As used herein, the term "module" may refer to any component or set of components that perform the functionality attributed to the module. This may include one or more physical processors during execution of processor readable instructions, the processor readable instructions, circuitry, hardware, storage media, or any other components.

It should be appreciated that although modules 308, 310, 312, 314, and/or 316 are illustrated in FIG. 3 as being implemented within a single processing unit, in implementations in which processor(s) 328 includes multiple processing units, one or more of modules 308, 310, 312, 314, and/or 316 may be implemented remotely from the other modules. The description of the functionality provided by the different modules 308, 310, 312, 314, and/or 316 described below is for illustrative purposes, and is not intended to be limiting, as any of modules 308, 310, 312, 314, and/or 316 may provide more or less functionality than is described. For example, one or more of modules 308, 310, 312, 314, and/or 316 may be eliminated, and some or all of its functionality may be provided by other ones of modules 308, 310, 312, 314, and/or 316. As another example, processor(s) 328 may be configured to execute one or more additional modules that may perform some or all of the functionality attributed below to one of modules 308, 310, 312, 314, and/or 316.

The techniques described herein may be implemented as method(s) that are performed by physical computing device(s); as one or more non-transitory computer-readable storage media storing instructions which, when executed by computing device(s), cause performance of the method(s); or, as physical computing device(s) that are specially configured with a combination of hardware and software that causes performance of the method(s).

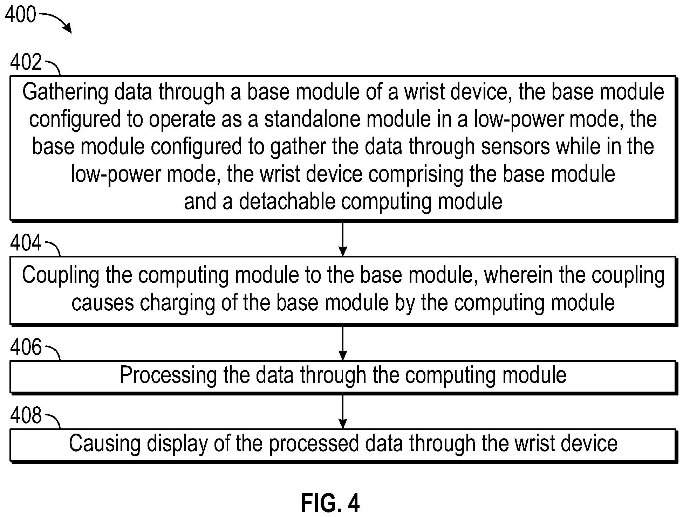

FIG. 4 illustrates an example flow diagram (e.g., process 400) for processing data obtained from a wrist device, according to certain aspects of the disclosure. For explanatory purposes, the example process 400 is described herein with reference to FIGS. 1-3. Further for explanatory purposes, the steps of the example process 400 are described herein as occurring in serial, or linearly. However, multiple instances of the example process 400 may occur in parallel. For purposes of explanation of the subject technology, the process 400 will be discussed in reference to FIGS. 1-3.

At step 402, the process 400 may include gathering data through a base module of a wrist device. The base module may be configured to operate as a standalone module in a low-power mode. The base module may be configured to gather the data through sensors while in the low-power mode. The wrist device may include the base module and a detachable computing module. At step 404, the process 400 may include charging the base module by the computing module when the computing module is coupled to the base module. At step 406, the process 400 may include processing the data through the computing module. At step 408, the process 400 may include causing display of the processed data through the wrist device.

For example, as described above in relation to FIGS. 1-3, at step 402, the process 400 may include gathering data through a base module (e.g., base module 150) of a wrist device (e.g., wrist device 100). The base module may be configured to operate as a standalone module in a low-power mode. The base module may be configured to gather the data through sensors (e.g., sensors 158) while in the low-power mode. The wrist device may include the base module and a detachable computing module (e.g., computing module 110). At step 404, the process 400 may include charging the base module by the computing module (e.g., via charging module 314) when the computing module is coupled to the base module (e.g., via coupling module 310). At step 406, the process 400 may include processing the data through the computing module (e.g., via processing module 312). At step 408, the process 400 may include causing display (e.g., GUIs 200, 250) of the processed data through the wrist device.

According to an aspect, the data includes biometric data of a user.

According to an aspect, the processed data includes processed biometric data.

According to an aspect, the sensors include biometric sensors.

According to an aspect, the process 400 for charging the base module by the computing module further includes charging a base battery of the base module through a computing battery of the computing module.

According to an aspect, the base module is configured to communicatively couple with an augmented reality/virtual reality (AR/VR) headset.

According to an aspect, the processed data is caused to be displayed through a display of the wrist device.

According to an aspect, the computing battery has larger charge capacity than the base battery.

According to an aspect, the sensors are enabled or disabled depending on available power in the base battery.

According to an aspect, the base battery has a charged lifetime of over 300 hours, and the base module prioritizes operation in a power savings mode.

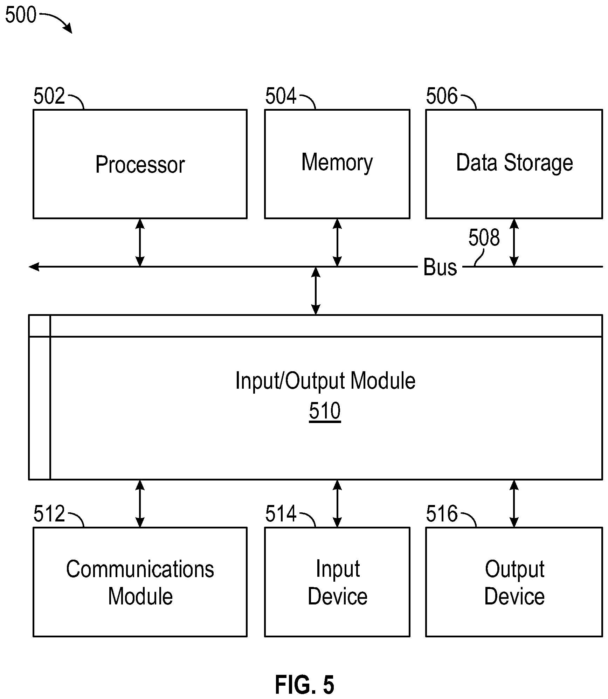

FIG. 5 is a block diagram illustrating an exemplary computer system 500 with which aspects of the subject technology can be implemented. In certain aspects, the computer system 500 may be implemented using hardware or a combination of software and hardware, either in a dedicated server, integrated into another entity, or distributed across multiple entities.

Computer system 500 (e.g., server and/or client) includes a bus 508 or other communication mechanism for communicating information, and a processor 502 coupled with bus 508 for processing information. By way of example, the computer system 500 may be implemented with one or more processors 502. Processor 502 may be a general-purpose microprocessor, a microcontroller, a Digital Signal Processor (DSP), an Application Specific Integrated Circuit (ASIC), a Field Programmable Gate Array (FPGA), a Programmable Logic Device (PLD), a controller, a state machine, gated logic, discrete hardware components, or any other suitable entity that can perform calculations or other manipulations of information.

Computer system 500 can include, in addition to hardware, code that creates an execution environment for the computer program in question, e.g., code that constitutes processor firmware, a protocol stack, a database management system, an operating system, or a combination of one or more of them stored in an included memory 504, such as a Random Access Memory (RAM), a flash memory, a Read-Only Memory (ROM), a Programmable Read-Only Memory (PROM), an Erasable PROM (EPROM), registers, a hard disk, a removable disk, a CD-ROM, a DVD, or any other suitable storage device, coupled to bus 508 for storing information and instructions to be executed by processor 502. The processor 502 and the memory 504 can be supplemented by, or incorporated in, special purpose logic circuitry.

The instructions may be stored in the memory 504 and implemented in one or more computer program products, i.e., one or more modules of computer program instructions encoded on a computer-readable medium for execution by, or to control the operation of, the computer system 500, and according to any method well-known to those of skill in the art, including, but not limited to, computer languages such as data-oriented languages (e.g., SQL, dBase), system languages (e.g., C, Objective-C, C++, Assembly), architectural languages (e.g., Java, .NET), and application languages (e.g., PHP, Ruby, Perl, Python). Instructions may also be implemented in computer languages such as array languages, aspect-oriented languages, assembly languages, authoring languages, command line interface languages, compiled languages, concurrent languages, curly-bracket languages, dataflow languages, data-structured languages, declarative languages, esoteric languages, extension languages, fourth-generation languages, functional languages, interactive mode languages, interpreted languages, iterative languages, list-based languages, little languages, logic-based languages, machine languages, macro languages, metaprogramming languages, multiparadigm languages, numerical analysis, non-English-based languages, object-oriented class-based languages, object-oriented prototype-based languages, off-side rule languages, procedural languages, reflective languages, rule-based languages, scripting languages, stack-based languages, synchronous languages, syntax handling languages, visual languages, Wirth languages, and xml-based languages. Memory 504 may also be used for storing temporary variable or other intermediate information during execution of instructions to be executed by processor 502.

A computer program as discussed herein does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, subprograms, or portions of code). A computer program can be deployed to be executed on one computer or on multiple computers that are located at one site or distributed across multiple sites and interconnected by a communication network. The processes and logic flows described in this specification can be performed by one or more programmable processors executing one or more computer programs to perform functions by operating on input data and generating output.

Computer system 500 further includes a data storage device 506 such as a magnetic disk or optical disk, coupled to bus 508 for storing information and instructions. Computer system 500 may be coupled via input/output module 510 to various devices. The input/output module 510 can be any input/output module. Exemplary input/output modules 510 include data ports such as USB ports. The input/output module 510 is configured to connect to a communications module 512. Exemplary communications modules 512 include networking interface cards, such as Ethernet cards and modems. In certain aspects, the input/output module 510 is configured to connect to a plurality of devices, such as an input device 514 and/or an output device 516. Exemplary input devices 514 include a keyboard and a pointing device, e.g., a mouse or a trackball, by which a user can provide input to the computer system 500. Other kinds of input devices 514 can be used to provide for interaction with a user as well, such as a tactile input device, visual input device, audio input device, or brain-computer interface device. For example, feedback provided to the user can be any form of sensory feedback, e.g., visual feedback, auditory feedback, or tactile feedback, and input from the user can be received in any form, including acoustic, speech, tactile, or brain wave input. Exemplary output devices 516 include display devices such as an LCD (liquid crystal display) monitor, for displaying information to the user.

According to one aspect of the present disclosure, the above-described gaming systems can be implemented using a computer system 500 in response to processor 502 executing one or more sequences of one or more instructions contained in memory 504. Such instructions may be read into memory 504 from another machine-readable medium, such as data storage device 506. Execution of the sequences of instructions contained in the main memory 504 causes processor 502 to perform the process steps described herein. One or more processors in a multi-processing arrangement may also be employed to execute the sequences of instructions contained in memory 504. In alternative aspects, hard-wired circuitry may be used in place of or in combination with software instructions to implement various aspects of the present disclosure. Thus, aspects of the present disclosure are not limited to any specific combination of hardware circuitry and software.

Various aspects of the subject matter described in this specification can be implemented in a computing system that includes a back end component, e.g., such as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. The communication network can include, for example, any one or more of a LAN, a WAN, the Internet, and the like. Further, the communication network can include, but is not limited to, for example, any one or more of the following network topologies, including a bus network, a star network, a ring network, a mesh network, a star-bus network, tree or hierarchical network, or the like. The communications modules can be, for example, modems or Ethernet cards.

Computer system 500 can include clients and servers. A client and server are generally remote from each other and typically interact through a communication network. The relationship of client and server arises by virtue of computer programs running on the respective computers and having a client-server relationship to each other. Computer system 500 can be, for example, and without limitation, a desktop computer, laptop computer, or tablet computer. Computer system 500 can also be embedded in another device, for example, and without limitation, a mobile telephone, a PDA, a mobile audio player, a Global Positioning System (GPS) receiver, a video game console, and/or a television set top box.

The term "machine-readable storage medium" or "computer-readable medium" as used herein refers to any medium or media that participates in providing instructions to processor 502 for execution. Such a medium may take many forms, including, but not limited to, non-volatile media, volatile media, and transmission media. Non-volatile media include, for example, optical or magnetic disks, such as data storage device 506. Volatile media include dynamic memory, such as memory 504. Transmission media include coaxial cables, copper wire, and fiber optics, including the wires that comprise bus 508. Common forms of machine-readable media include, for example, floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH EPROM, any other memory chip or cartridge, or any other medium from which a computer can read. The machine-readable storage medium can be a machine-readable storage device, a machine-readable storage substrate, a memory device, a composition of matter effecting a machine-readable propagated signal, or a combination of one or more of them.

As the user computing system 500 reads game data and provides a game, information may be read from the game data and stored in a memory device, such as the memory 504. Additionally, data from the memory 504 servers accessed via a network the bus 508, or the data storage 506 may be read and loaded into the memory 504. Although data is described as being found in the memory 504, it will be understood that data does not have to be stored in the memory 504 and may be stored in other memory accessible to the processor 502 or distributed among several media, such as the data storage 506.

As used herein, the phrase "at least one of" preceding a series of items, with the terms "and" or "or" to separate any of the items, modifies the list as a whole, rather than each member of the list (i.e., each item). The phrase "at least one of" does not require selection of at least one item; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

To the extent that the terms "include," "have," or the like is used in the description or the claims, such term is intended to be inclusive in a manner similar to the term "comprise" as "comprise" is interpreted when employed as a transitional word in a claim. The word "exemplary" is used herein to mean "serving as an example, instance, or illustration." Any embodiment described herein as "exemplary" is not necessarily to be construed as preferred or advantageous over other embodiments.

A reference to an element in the singular is not intended to mean "one and only one" unless specifically stated, but rather "one or more." All structural and functional equivalents to the elements of the various configurations described throughout this disclosure that are known or later come to be known to those of ordinary skill in the art are expressly incorporated herein by reference and intended to be encompassed by the subject technology. Moreover, nothing disclosed herein is intended to be dedicated to the public regardless of whether such disclosure is explicitly recited in the above description.

While this specification contains many specifics, these should not be construed as limitations on the scope of what may be claimed, but rather as descriptions of particular implementations of the subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

The subject matter of this specification has been described in terms of particular aspects, but other aspects can be implemented and are within the scope of the following claims. For example, while operations are depicted in the drawings in a particular order, this should not be understood as requiring that such operations be performed in the particular order shown or in sequential order, or that all illustrated operations be performed to achieve desirable results. The actions recited in the claims can be performed in a different order and still achieve desirable results. As one example, the processes depicted in the accompanying figures do not necessarily require the particular order shown, or sequential order, to achieve desirable results. In certain circumstances, multitasking and parallel processing may be advantageous. Moreover, the separation of various system components in the aspects described above should not be understood as requiring such separation in all aspects, and it should be understood that the described program components and systems can generally be integrated together in a single software product or packaged into multiple software products. Other variations are within the scope of the following claims.

## Claims

1. A wrist device (100), comprising:
a base module (150) comprising a low-power display (154), a base battery (156), and sensors (158), the base module (150) being configured to (i) operate as a standalone module in a low-power mode and (ii) gather data through the sensors (158); and
a computing module (110) configured to removably couple with the base module (150), the computing module (110) comprising a high-definition display (112) and a computing battery (114), the computing module (110) being configured to analyze the data when coupled to the base module (150),
wherein the computing battery (114) of the computing module (110) is configured to charge the base battery (156) of the base module (150) when the computing module (110) is coupled to the base module (150).

2. The wrist device of claim 1, wherein:
the base module (150) further comprises a base processor (160);
the computing module (110) further comprises a computing processor (116); and
the base processor (160) operates at a lower processing threshold than the computing processor (116).

3. The wrist device of claim 1, wherein the sensors (158) are enabled or disabled depending on available power in the base battery (156); and/or
wherein the base battery (156) has a charged lifetime of over 300 hours, and the base module (150) prioritizes operation in a power savings mode.

4. The wrist device of claim 1, wherein the sensors (158) comprise biometric sensors, and the data comprises biometric data.

5. The wrist device of claim 1, wherein the low-power display (154) comprises a flexible electrophoretic display.

6. The wrist device of claim 1, wherein the computing module (110) further comprises a camera (118); and/or
wherein different computing modules (110) may comprise varying sized screens and/or varying quality and size of camera modules.

7. The wrist device of claim 1, wherein the base module (150) is configured to communicatively couple with an augmented reality/virtual reality (AR/VR) headset.

8. A non-transitory computer-readable storage medium (326, 504) comprising instructions (306) stored thereon, which when executed by one or more processors (328, 502), cause the one or more processors (328, 502) to perform operations for processing data obtained from a wrist device (100), the operations comprising:
gathering data through a base module (150) of the wrist device (100), the base module (150) configured to operate as a standalone module in a low-power mode, the base module (150) configured to gather the data through sensors while in the low-power mode, the wrist device (100) comprising the base module (150) and a detachable computing module (110);
charging the base module (150) by the computing module (110) when the computing module (110) is coupled to the base module (150);
processing the data through the computing module (110); and
causing display of the processed data through the wrist device (100).

9. The computer-readable storage medium of claim 8, wherein the charging of the base module (150) by the computing module (110) further comprises:
charging a base battery (156) of the base module (150) through a computing battery (114) of the computing module (110).

10. The computer-readable storage medium of claim 8, wherein the data comprises biometric data of a user; and/or
wherein the processed data comprises processed biometric data; and/or
wherein the processed data is caused to be displayed through a display (154) of the wrist device (100).

11. The computer-readable storage medium of claim 8, wherein the sensors comprise biometric sensors.

12. The computer-readable storage medium of claim 8, wherein the base module is configured to communicatively couple with an augmented reality/virtual reality (AR/VR) headset.

13. A system (500) configured for processing biometric data obtained from a wrist device (100), the system (500) comprising:
one or more hardware processors (328, 502) configured by machine-readable instructions to:
gather biometric data through a base module (150) of the wrist device (100), the base module (150) configured to operate as a standalone module in a low-power mode, the base module (150) configured to gather the biometric data through biometric sensors (158) while in the low-power mode, the wrist device (100) comprising the base module (150) and a detachable computing module (110);
charge a base battery (156) of the base module (150) by a computing battery (114) of the computing module (110) when the computing module (110) is coupled to the base module (150);
process the biometric data through the computing module (110); and
cause display of the processed biometric data through the wrist device (100).

14. The system of claim 13, wherein the computing battery (114) has larger charge capacity than the base battery (156); and/or
wherein the processed biometric data is caused to be displayed through a display of the wrist device (100).

15. The system of claim 13, wherein the base module (150) is configured to couple with an augmented reality/virtual reality (AR/VR) headset.
